# EUROPÄISCHE PATENTANMELDUNG

(11) **EP 2 280 195 A1**
(43) Veröffentlichungstag der Anmeldung: **02.02.2011**
(21) Anmeldenummer: 09166435.9
(22) Anmeldetag: 27.07.2009
(51) Int. Cl.: F16H 61/14, B60W 10/02, B60W 10/10

(54) **Verfahren zur Steuerung einer Wandlerüberbrückungskupplung**

(71) Anmelder: ZF Friedrichshafen AG, 88038 Friedrichshafen (DE)
(72) Erfinder: Tögel, Matthias, 97711, Maßbach (DE)

(57) **Zusammenfassung**

Verfahren zur Steuerung eines Automatgetriebes eines Kraftfahrzeuges umfassend mindestens einen Planetenradsatz und einen im Drehmomentfluss vorgeschalteten Drehmomentwandler mit einer Wandlerüberbrückungskupplung, wobei die Wandlerüberbrückungskupplung bei im Wesentlichen stehendem Kraftfahrzeug in Richtung Schließen betätigt wird.

## Beschreibung

### Beschreibung

Die Erfindung betrifft ein Verfahren zum Betreiben eines Automatgetriebes eines Kraftfahrzeuges gemäß der im Oberbegriff des Patentanspruches 1 näher definierten Art, sowie ein Verfahren zum Betreiben eines Doppelkupplungsgetriebes gemäß Anspruch 5

Aus der Praxis ist es hinlänglich bekannt, Antriebsstränge von Fahrzeugen mit als hydrodynamische Drehmomentwandler ausgeführten Anfahrelementen auszubilden. Um hydraulische Verluste im Bereich der hydrodynamischen Drehmomentwandler zu reduzieren bzw. zu eliminieren, ist dazu übergegangen worden, den Drehmomentwandlern so genannte Wandlerüberbrückungskupplungen zuzuordnen. In geschlossenem Zustand einer Wandlerüberbrückungskupplung wird hierzu eine Drehmomentübertragung in einem Antriebsstrang eines Fahrzeuges im Bereich eines Drehmomentwandlers überbrückt. Die Drehmomentübertragung erfolgt dann im Wesentlichen mit geringeren Verlusten über eine durch Reibschluss hergestellte Verbindung.

Die Wandlerüberbrückungskupplung verbindet hierbei die als Pumpenrad ausgebildete Eingangsseite und die als Turbinenrad ausgebildete Ausgangsseite des Drehmomentwandlers und überbrückt damit den Drehmomentwandler. Dabei wirkt die Wandler-Überbrückungskupplung wie eine Ölbadkupplung.

Die Wandlerüberbrückungskupplung wird üblicherweise bei entsprechend hoher Drehzahl beim oder nach dem Anfahren, wenn nur noch eine geringe Differenz zwischen Ein- und Ausgangsdrehzahl besteht, zugeschaltet.

Bei modernen Automatgetrieben arbeitet die Überbrückungskupplung in allen Gängen und sogar bereits einsetzend im Wandlungsbereich.

Die Wandlerüberbrückungskupplung besteht üblicherweise aus einem Lamellenpaket mit alternierend angeordneten Außenlamellen und Innenlamellen, wobei die mindestens eine Außenlamelle als Stahllamelle ausgebildet ist und an Ihrem Außenumfang mit einem Verzahnungsprofil ausgeführt ist, welche in ein korrespondierendes Verzahnungsprofil der Eingangsseite des Drehmomentwandlers eingreift. Entsprechend ist die mindestens eine Innenlamelle an ihrem Innenumfang mit einem Verzahnungsprofil ausgeführt, welche in ein korrespondierendes Verzahnungsprofil der Ausgangsseite des Drehmomentwandlers eingreift.

Die mindestens eine Innenlamelle ist üblicherweise als belagtragende Lamelle ausgeführt. Für das erfindungsgemäße Verfahren sind jedoch auch Wandlerüberbrückungskupplungen geeignet, bei welchen die Außenlamelle(n) der Ausgangsseite und die Innenlamelle(n) der Eingangsseite des Drehmomentwandlers zugeordnet sind. Auch können die Innenlamellen als Stahllamellen und die Außenlamellen als Belaglamellen ausgeführt sein.

Die Wandlerüberbrückungskupplung ist als "normally open" Kupplung ausgeführt, das heißt, dass zum Schließen der Kupplung diese aktiv betätigt werden muss indem bei der Wandlerüberbrückungskupplung ein Druckölstrom bereitgestellt wird, welcher das Lamellenpaket der Kupplung aktiv zusammenschiebt und zusammendrückt,

Zur weiteren Verbrauchsreduzierung ist in modernen Automatgetrieben eine sogenannte Standabkopplung vorgesehen. Hierbei steuert die Elektronik die Eingangskupplung im Getriebe so, dass der Motor bei stehendem Fahrzeug trotz eingelegter Fahrposition vom übrigen Antriebsstrang abgekoppelt wird.

Anstelle einer Eingangskupplung kann auch eine Eingangsbremse vorgesehen sein. Die Eingangskupplung oder die Eingangsbremse sind in üblicher Weise als Lamellenkupplung oder -bremse oder als Bandbremse ausgeführt und einer Komponente eines Planetenradsatzes bestehend aus Sonnenrad, Planeten und Außenrad, zugeordnet. Üblicherweise wird bei der Standabkopplung die Eingangskupplung geöffnet, so daß der Planetenradsatz vom stehenden Abtrieb des Getriebes abgekoppelt ist und sich frei drehen kann.

Aus dem Stand der Technik sind bereits derartige Automatgetriebe mit einer sogenannten Standabkopplungsfunktion bekannt, wobei eine Standabkopplungsfunktion bei laufendem Motor und Stillstand des Kraftfahrzeugs den Verbrauch desselben bei eingelegter Fahrposition des Automatgetriebes reduziert. Dies kann dadurch erfolgen, dass die Standabkopplungsfunktion das Automatgetriebe entweder von der eingelegten Fahrposition in die Neutralposition oder Parkierungsposition schaltet, oder dass alternativ bei eingelegter Fahrposition mindestens eine am Kraftfluss beteiligte Kupplung in Schlupf gebracht wird.

Automatgetriebe mit Standabkopplungsfunktion sind insbesondere aus der DE 42 23 084 A1, und der DE 44 46 077 C2 bekannt. Gemäß der DE 42 23 084 A1 wird bei eingelegter Fahrposition über die Standabkopplungsfunktion eine Standabkopplung dann aktiviert, wenn einerseits die Geschwindigkeit des Kraftfahrzeugs kleiner als ein Geschwindigkeitsgrenzwert ist und wenn weiterhin gleichzeitig ein Drosselklappenwert eines Motordrosselklappenventils kleiner als ein Drosselklappengrenzwert ist.

Die Getriebeposition des Automatgetriebes wird üblicherweise mittels eines Wählhebels bestimmt welcher zumindest die Fahrstufen P,R,N,D aufweist, wobei P die Parksperrenposition darstellt, bei welcher zum Beispiel die Abtriebswelle des Getriebes mittelbar mechanisch verriegelbar ist, um das Fahrzeug gegen Rollen zu blockieren.

Bei Anwahl der Neutralposition N wird der Kraftfluss im Getriebe durch Öffnen einer Lamellenkupplung oder Lamellenbremse, zumeist der Eingangskupplung, aufgetrennt, so daß der Drehmomentwandler nicht gegen das Automatgetriebe arbeiten muss und sich bei stehendem Fahrzeug das Turbinenrad mit dem Pumpenrad mitdrehen kann und der Drehzahlabfall in der geöffneten Eingangskupplung mit wesentlich kleinerem Schleppmoment stattfindet als beim angebremsten Fahrzeug in der Fahrstellung D, bei der der Drehzahlabfall zwischen mit Motordrehzahl drehendem Pumpenrad und stehendem Turbinenrad stattfindet. Die geringsten Schleppmomente existieren wenn der erste Planetenradsatz im Kraftfluss geöffnet wird, so daß dieser sich frei drehen kann und der Rest des Getriebes steht. Es kann aber prinzipiell jeder Planetenradsatz geöffnet werden, welcher den Kraftfluss zwischen Turbinenrad und Getriebeausgangswelle auftrennen kann.

In der Fahrposition D schaltet das Automatgetriebe beim Fahren automatisch durch die Getriebegänge, wobei der Kraftfluss im Getriebe im Normalfall nicht aufgetrennt wird. Die Standabkopplung des Automatgetriebes, bei welcher sich der Wählhebel in der Position D befindet, entspricht von der Funktion her dem Getriebeschaltzustand in der Position N.

Die Fahrposition R schaltet das Getriebe in die Rückwärtsfahrstufe.

Befindet sich das Fahrzeug in der Getriebeposition N so ist wie bereits ausgeführt der Kraftfluss im Getriebe dadurch aufgetrennt, dass sich mindestens ein Planetenradsatz frei drehen kann. Weiterhin ist die Wandlerüberbrückungskupplung geöffnet. Durch das geöffnete Getriebe kann zumindest der erste Planetenradsatz sein Drehmoment nicht abstützen. Somit wird kein Drehmoment an den Getriebeausgang übertragen. Die Wandlerprimärseite, das Pumpenrad, und der Getriebeeingang, das Turbinenrad, laufen bedingt durch das hydrodynamische Anfahrelement und die Schleppmomente im Wandler nahezu mit gleicher Drehzahl. Die Differenzdrehzahl an der Wandlerüberbrückungskupplung, welche der Differenzdrehzahl zwischen Primärseite und Sekundärseite des Drehmomentwandlers entspricht, wird somit sehr gering, wodurch sich kein signifikantes Schleppmoment an der Wandlerüberbrückungskupplung ausbilden kann. Die selbe Situation ist auch bei der Standabkopplung gegeben.

Dies hat den Vorteil, dass durch das verminderte Schleppmoment an der Wandlerüberbrückungskupplung und das verminderte hydrodynamische Moment zwischen Pumpenrad und Turbinenrad der Verbrauch des Fahrzeugs im Stillstand reduziert wird und das Fahrzeug für den Stillstand nicht mehr gegen das systembedingte Ankriechen angebremst werden muss.

Da bei der Standabkopplung die Primärseite und die Sekundärseite der Wandlerüberbrückungskupplung annähernd im Gleichlauf drehen, kann sich kein signifikantes Schleppmoment mehr zwischen den Belaglamellen und den Stahllamellen der Wandlerüberbrückungskupplung ausbilden. Somit steht den Drehungleichförmigkeiten des Motors kein dämpfendes Schleppmoment mehr gegenüber. Die Lamellen der Wandlerüberbrückungskupplung können in dem vorhandenen Verzahnungsspiel relativ zur Primärseite schwingen und wiederkehrend wechselseitig an den Flanken der Verzahnung anschlagen. Nachteilig hierbei ist, dass dies mit einer unvorteilhaften Geräuschentwicklung verbunden ist, der Wandler rasselt.

Hiervon ausgehend liegt der vorliegenden Erfindung die Aufgabe zu Grunde, ein Verfahren zur Steuerung einer Wandlerüberbrückungskupplung zu schaffen, welches die aufgezeigten Nachteile vermeidet.

Diese Aufgabe wird durch ein Verfahren gemäß Patentanspruch 1 gelöst.

Erfindungsgemäß wird die Wandlerüberbrückungskupplung bei im Wesentlichen stehendem Kraftfahrzeug in Richtung Schließen betätigt. Dies hat den Vorteil, dass die Lamellen des Lamellenpakets in Reibkontakt gebracht werden und die primärseitigen Lamellen, welche mit dem Pumpenrad drehverkoppelt sind, sich nicht mehr frei in ihrem Verzahnungsspiel bewegen können und gegen die Verzahnung der Wandlerseite schlagen können. Die primärseitigen Lamellen sind vorzugsweise als Stahllamellen ausgebildet. Vorzugsweise wird die Wandlerüberbrückungskupplung soweit in Richtung Schließen betätigt, dass die Lamellen in Reibeingriff gebracht werden. Die Wandlerüberbrückungskupplung braucht hierbei nicht mit vollem Betätigungsdruck zum Schließen beaufschlagt werden, sondern mit einem geringeren Druck, welcher allerdings ausreicht, die Lamellen in Reibeingriff zu bringen, sie kann aber auch mit einem höheren Druck beaufschlagt werden.

Ist die Wandlerüberbrückungskupplung bei im Wesentlichen stehenden Fahrzeug zum Beispiel nach einem Ausrollen bereits in Richtung schließen betätigt, sieht das erfindungsgemäße Verfahren vor, die Wandlerüberbrückungskupplung im betätigten Zustand zu lassen und einen Betätigungsdruck aufrecht zu erhalten.

Gemäß einer vorteilhaften Weiterbildung wird die Wandlerüberbrückungskupplung bei einer Standabkopplung des Fahrzeuges betätigt. Hierzu wird erfindungsgemäß zuerst die für die Standabkopplung vorgesehene Kupplung oder Bremse im Automatgetriebe geöffnet und anschließend oder überschneidend die Wandlerüberbrückungskupplung in Richtung Schließen betätigt.

Wird aus der Standabkopplung ausgehend wieder angefahren, wird zuerst die Wandlerüberbrückungskupplung geöffnet und anschließend oder überschneidend das Standabkopplungselement geschlossen.

Eine weitere vorteilhafte Anwendung sieht vor, die Wandlerüberbrückungskupplung dann in Richtung Schließen zu betätigen, wenn der Wählhebel des Getriebes in eine Neutralstellung gebracht wird und das Getriebe daraufhin nach Neutral, beziehungsweise in den Leerlauf schaltet.

Nach einer Weiterbildung der Erfindung sind jedoch auch Betriebssituationen denkbar, in welchen während einer Standabkopplung oder in einer Neutralstellung des Getriebes es sinnvoll erscheint, die Wandlerüberbrückungskupplung zu öffnen, beziehungsweise offen zu halten.

Es kann zum Beispiel vorgesehen sein, dass bei Überschreitung einer Fahrzeuggeschwindigkeit oder Motordrehzahl die Wandlerüberbrückungskupplung geöffnet wird oder offen gehalten wird. Weiterhin kann vorgesehen sein, dass unterhalb eines Temperaturschwellwertes unter der Betriebstemperatur das Verfahren nicht durchgeführt wird.

Eine weitere vorteilhafte Anwendung sieht vor, das erfindungsgemäße Verfahren in einer Parkstellung des Getriebes bei geöffneter Eingangskupplung des Getriebes durchzuführen.

Erfindungsgemäß, wird die Wandlerüberbrückungskupplung jedoch im geöffneten Zustand belassen, wenn in der Parkstellung des Getriebes der Kraftfluss im Getriebe nicht aufgetrennt ist, beziehungsweise die Eingangskupplung geschlossen ist.

Eine besonders vorteilhafte Weiterbildung sieht vor, dass vor dem erfindungsgemäßen Betätigen der Wandlerüberbrückungskupplung in Richtung Schließen bei im

Wesentlich stehenden Fahrzeug mittels des Steuergerätes eine Überprüfung durchgeführt wird, ob der Kraftfluss im Getriebe aufgetrennt ist oder ein bestimmtes Getriebeelement geöffnet ist.

Weiterhin kann vorgesehen sein, dass beim Schließen der Wandlerüberbrückungskupplung automatisch ein bestimmtes Getriebeelement drucklos geschaltet wird, wenn die Motordrehzahl oder die Fahrzeuggeschwindigkeit unter einem Schwellwert liegt.

Ein weiterer großer Vorteil des erfindungsgemäßen Verfahrens besteht darin, dass ein größeres Verzahnungsspiel zwischen dem Lamellenprofil und dem korrespondierenden Verzahnungsprofil vorgesehen werden kann, was zum Einen die Montage erleichtert und zum Anderen eine größere Toleranz im Fertigungsprozess zuläßt.

Das erfindungsgemäße Verfahren kann weiterhin nicht nur für Wandlerüberbrückungskupplungen in Drehmomentwandlern sinnvoll eingesetzt werden, sondern zum Beispiel auch für Lamellenkupplungen bei Doppelkupplungsgetrieben oder Hybridgetrieben.

Auch hierbei können dem eigentlichen Getriebe vorgeschaltete geöffnete Lamellenkupplungen, wie zum Beispiel Trennkupplungen oder Anfahrkupplungen zum Rasseln neigen, wenn der Kraftfluss im nachgeschalteten Antriebsstrang aufgetrennt ist, zum Beispiel durch geöffnete schaltbare Kupplungen oder Synchronisierungen.

Bei Doppelkupplungsgetrieben mit zwei Teilgetrieben und jeweils einer vorgeschalteten Kupplung kann vorgesehen sein, dass bei im Wesentlichen stillstehendem Fahrzeug die dem einen Teilgetriebe zugeordnete Kupplung in welchem keine Gangstufe eingelegt, in Richtung Schließen zu betätigen, oder beide Kupplungen in Richtung Schließen zu betätigen, wenn in beiden Teilgetrieben kein Gang eingelegt ist. Vor dem Wiederherstellen des Kraftflusses im Getriebe wird wie bereits ausgeführt, auch hier zuerst die Kupplung wieder entleert und anschließend oder zeitlich überschnitten die Getriebekupplung oder Synchronisation geschaltet.

Auch bei Hybridgetrieben, bei welchen eine Trennkupplung einem Automatgetriebe vorgeschaltet ist, um einen verbrennungsmotorischen Antriebsmotor vom Antriebsstrang abzukoppeln, kann bei geöffneter Trennkupplung und laufendem Motor die Trennkupplung in dem Fall, in dem diese als Lamellenkupplung ausgeführt ist, die motorseitige Hälfte der Kupplung aufgrund der Drehungleichförmigkeiten zum Rasseln neigen.

Hier kann das erfindungsgemäße Verfahren ebenso eingesetzt werden, wenn der Kraftfluss im der der Trennkupplung nachfolgendem Antriebsstrang aufgetrennt ist. Erfindungsgemäß wird in diesem Fall bei laufendem Verbrennungsmotor die Trennkupplung in Richtung Schließen betätigt.

Allen erfindungsgemäßen Verfahren ist gleich, dass eine Lamellenkupplung vorgesehen ist, welche primärseitige Lamellen aufweist, welche mittelbar mit dem Verbrennungsmotor gekoppelt sind und sekundärseitige Lamellen aufweist, welche mittelbar mit einer Eingangswelle eines im Kraftfluss nachfolgenden Getriebes gekoppelt sind, und wobei die Lamellenkupplung zum Schließen aktiv betätigt werden muss. Weiterhin ist allen Verfahren gleich, dass das Getriebe Schaltorgane aufweist, mittels denen innerhalb des Getriebes der Kraftfluss derart aufgetrennt werden kann, dass zumindest ein Teil des Getriebes, welcher mittelbar mit der Sekundärseite drehverkoppelt ist nicht mehr mit einer Ausgangswelle des Getriebes drehverkoppelt ist und dieser Teil des Getriebes bei geöffneter Lamellenkupplung und geöffnetem Schaltorgan somit weder mit dem Verbrennungsmotor, noch mit der Getriebeausgangswelle, beziehungsweise der angetriebenen Antriebsachse drehverkoppelt ist. Das betreffende Schaltorgan, kann hierbei ganz geöffnet sein, oder leicht eingerückt sein und schleifen, wodurch ein geringes Moment übertragen wird.

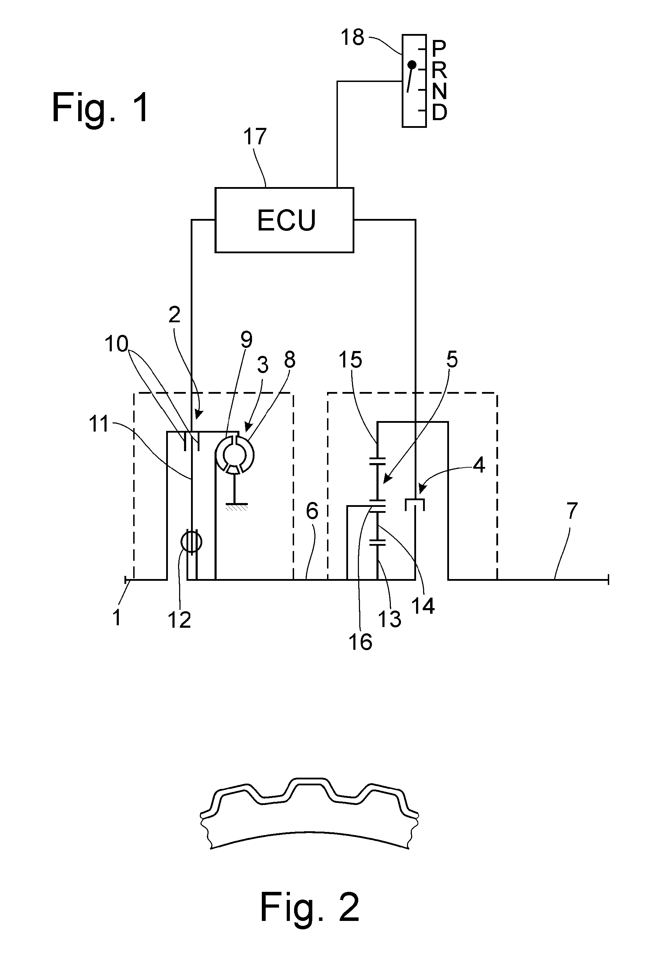

Die Erfindung wird nachfolgend anhand der Figuren 1 und 2 beschrieben.

Figur 1 zeigt einen Drehmomentwandler, bestehend aus einer Wandlerüberbrückungskupplung 2 und einem hydrodynamischen Anfahrelement 3 bestehend aus einem Pumpenrad 8 und einem Turbinenrad 9. Das Pumpenrad ist als Eingangsseite, bzw. Primärseite ausgebildet und mit einer Kurbelwelle 1 eines Verbrennungsmotors gekoppelt. Die Wandlerüberbrückungskupplung 2 weist primärseitige Lamellen 10 auf, welche als Außenlamellen ausgebildet sind und eine sekundärseitige Lamelle 11 auf. Die Wandlerüberbrückungskupplung dient zum Überbrücken des hydrodynamischen Anfahrelementes, indem bei betätigter, also geschlossener Wandlerüberbrückungskupplung das Turbinenrad 9 und das Pumpenrad 8 kurzgeschlossen sind. Auf der Sekundärseite der Wandlerüberbrückungskupplung ist weiterhin eine Torsionsschwingungsdämpfungseinrichtung 12 angeordnet. Die Sekundärseite der Wandlerüberbrückungskupplung und das Turbinenrad 9 sind mit einer Eingangswelle 6 des Automatgetriebes drehverkoppelt. Das Automatgetriebe besteht aus einem Planetenradsatz welcher aus einem Sonnenrad 13, einem Planetensatz 14 und einem Hohlrad 15 besteht.

Die Eingangswelle 6 ist in Figur 1 mit dem Planetenradträger 16 verkoppelt. Weiterhin ist das Sonnenrad 13 mit einer Getriebebremse 4 zum Anbremsen des Sonnenrades 13 ausgeführt.

Mit dem Hohlrad 15 ist die Getriebeausgangswelle 7 des Automatgetriebes gekoppelt.

Die Wandlerüberbrückungskupplung 2 und die Getriebebremse 4 sind mit einer elektrischen Steuereinheit ECU 17 verbunden, welche die als Lamellenkupplung ausgebildete Wandlerüberbrückungskupplung 2 und die als Lamellenbremse ausgebildete Getriebebremse 4 im Sinne eines Schließens und Öffnens ansteuern kann. Die Kupplung und die Bremse werden hierzu hydraulisch betätigt.

Weiterhin ist mit der ECU ein Wählhebel 18 verbunden, mittels welchen mindestens die Fahrstufen P,R,N,D gewählt werden können. Die ECU steuert entsprechend der Vom Fahrer gewählten Fahrstufe das Getriebe entsprechend an. Ist die Fahrstufe N angewählt oder ist die Fahrstufe D angewählt und die ECU hat aufgrund von bestimmten Betriebsbedingungen eine Standabkopplung eingeleitet, wird im Getriebe die Getriebebremse 4 ganz oder zumindest teilweise geöffnet. Der Planetenradsatz 5 kann nun aufgrund der geöffneten Bremse 4 das Drehmoment, welches das das Turbinenrad 9 aufgrund des mit Motordrehzahl rotierenden Pumpenrades 8 erfährt, nicht mehr abstützen, woraufhin der Planetenradträger beginnt, die Drehzahl des Turbinenrades 9 einzunehmen. Die Differenzdrehzahl zwischen den Stahllamellen 10 und der Sekundärseitigen Lamelle der Wandlerüberbrückungskupplung 2 wird sehr gering, wodurch auch die Schleppmomente zwischen den Lamellen in der Wandlerüberbrückungskupplung sich merklich verringern. Die Drehungleichförmigkeit des Motors würde nun ausreichen, dass die Stahllamellen aufgrund des Spieles in der Lamellenverzahnung an ihrer Außenverzahnung am sie aufnehmenden Verzahnungsprofil der Primärseite des Drehmomentwandlers wiederkehrend wechselseitig anschlagen würden. Um dies zu verhindern, steuert die ECU zeitlich überschnitten oder nach dem Öffnen der Bremse 4 die Wandlerüberbrückungskupplung 2 in Richtung Schließen an. Die Wandlerüberbrückungskupplung 2 wird hierzu von einer hydraulischen Druckölversorgung mit Drucköl beaufschlagt, wodurch die Lamellen 10, 11 der Wandlerüberbrückungskupplung 2 in Reibeingriff gebracht werden und zumindest soviel Drehmoment übertragen, dass die Stahllamellen nicht mehr frei gegen Verzahnung schlagen können.

Figur 2 zeigt einen Ausschnitt einer Stahllamelle in Aufsicht.

Am Außenumfang ist das Verzahnungsprofil angeordnet, welches in ein korrespondierendes Verzahnungsprofil der Primärseite der Wandlerüberbrückungskupplung, dem Lamellenträger, zur Drehverkopplung eingreift. Deutlich zu erkennen ist das Verzahnungsspiel zwischen dem Verzahnungsprofil der Lamelle und dem Verzahnungsspiel des Lamellenträgers. Der Lamellenträger und die Lamelle können sich relativ zueinander gemäß der Größe des Verzahnungsspiels verdrehen, bis die Flanken der Verzahnung der Lamellen an den Flanken des Verzahnungsprofils des Lamellenträgers anschlagen. Anschließend verdrehen sich die Lamellen und der Lamellenträger in entgegengesetzter Drehrichtung zueinander, bis die gegenüberliegenden Flanken der Verzahnung der Lamellen und die Flanken des Verzahnungsprofils des Lamellenträgers aneinander anschlagen. Wenn sich dieses Wechselspiel ständig wiederholt und aufgrund von Resonanzen des Systems angeregt wird, rasselt der Wandler.

## Patentansprüche

1. Verfahren zur Steuerung eines Automatgetriebes eines Kraftfahrzeuges umfassend mindestens einen Planetenradsatz und einen im Drehmomentfluss vorgeschalteten Drehmomentwandler mit einer Wandlerüberbrückungkupplung,
**dadurch gekennzeichnet,**
**dass** die Wandlerüberbrückungskupplung bei im Wesentlichen stehendem Kraftfahrzeug in Richtung Schließen betätigt wird oder betätigt bleibt.

2. Verfahren nach Anspruch 1,
**dadurch gekennzeichnet,**
**dass** das Verfahren bei einer Standabkopplung des Fahrzeuges durchgeführt wird.

3. Verfahren nach Anspruch 1 oder 2,
**dadurch gekennzeichnet,**
**dass** das Verfahren in einer Neutralstellung des Getriebes durchgeführt wird.

4. Verfahren nach mindestens einem der Ansprüche 1 bis 3,
**dadurch gekennzeichnet,**
**dass** das Verfahren in einer Parkstellung des Getriebes bei geöffneter Eingangskupplung des Getriebes durchgeführt wird.

5. Verfahren zur Steuerung eines Doppelkupplungsgetriebes eines Karaftfahrzeuges mit zwei Kupplungsanordnungen, welche jeweils einem Teilgetrieben zugeordnet sind und das Teilgetriebe vom Antriebsmotor abkuppeln können, wobei jedes Teilgetriebe mindestens eine mittels einer Synchronisationseinrichtung schaltbare Zahnradstufe aufweist zum Einlegen und Auslegen der mindestens einen Gangstufe ,
**dadurch gekennzeichnet,**
**dass** bei im Wesentlichen stehendem Kraftfahrzeug und mindestens einem Teilgetriebe in welchem keine Gangstufe eingelegt ist, die dem Teilgetriebe zugeordnete Kupplungsanordnung in Richtung Schließen betätigt wird oder betätigt bleibt.
